# EUROPEAN PATENT APPLICATION

(11) **EP 3 813 285 A1**
(43) Date of publication of application: **28.04.2021**
(21) Application number: 19205434.4
(22) Date of filing: 25.10.2019
(51) Int. Cl.: H04L 1/18

(54) **METHOD FOR PRIORITY-BASED DATA TRANSMISSION**

(71) Applicant: THALES DIS AIS Deutschland GmbH, 81541 München (DE)
(72) Inventor: BREUER, Volker, 16727 Boetzow (DE); WEHMEIER, Lars, 14612 Falkensee (DE)
(74) Representative: Grevin, Emmanuel

(57) **Abstract**

The present invention relates to a method for a user equipment operating by means of a base station in a cellular network, the user equipment being configured to transmit data packets with a higher and with a lower priority, comprising the steps of:
- sending a in a first message a lower priority data packet,
- receiving a HARQ non-acknowledgement response from the base station,
in case the transmission of at least one higher priority data packet becomes due since the step of sending the lower priority data packet:
- sending a second message containing an element being indicative to discontinue transmission of the lower priority data packet to the base station,
- in response receiving a response message from the base station.

## Description

### FIELD OF THE INVENTION

The present invention relates to a method for a user equipment operating in a cellular network. The invention also pertains to a user equipment using said method.

The present invention further relates to a method for a base station of a cellular network. The invention also pertains to a base station using said method.

### BACKGROUND OF THE INVENTION

Generally, in the field of wireless cellular communication it is known the concept of retransmission of non-acknowledged data transmissions, in particular from a user equipment to a base station, where the user equipment is camping on. Such concepts are known throughout the generations of cellular technology standards as ARQ (automatic repeat request) or HARQ (hybrid automatic repeat request).

This concept of HARQ is carried out on the physical layer (L1). That means at that time data packets are already converted in physical layer packets for RF transmission. Besides the packet itself also the other HARQ redundancy versions are created. Each of the packets is self-decodable but also in combination additional error correcting means can be applied. Hence, it comprises that a data packet is for a configurable time resend or correspondingly its redundancy version before a radio link error finally occurs. The concept was developed under the assumption of equally weighted data packets, without discrimination resp. favoring of data packets, that means the content of the data packet does not play a role for handling the data packets. With the advent of 5G / New Radio (NR) however the concept of prioritization is discussed to be introduced into the standard. With that it is foreseen that in case of resource collisions lower-priority traffic is supposed to wait for higher-priority traffic. This is supposed to be handled on the MAC layer (L2). However in the situation of tight resources and the need for carrying out high-priority data submissions the described HARQ process could delay the possibility to submit a high-priority data packet as the HARQ process is also working on a low-priority data transmission. Current measures foreseen for prioritization are working on the MAC layer, and cannot interfere once the HARQ process is involved.

It therefore requires ways to involve also the HARQ process in the priority based data transmission.

It is therefore the goal of present invention to overcome the mentioned disadvantages and to propose a solution for an improved data transmission considering prioritized transmissions.

Further alternative and advantageous solutions would, accordingly, be desirable in the art.

Even though the HARQ process on physical layer may be considered as quite fast in case of URLLC waiting that a sequential HARQ process has been finalized may be too much of a delay.

### SUMMARY OF THE INVENTION

For this it is according to a first aspect of the invention suggested a method for a user equipment according to claim 1. It is further suggested according to a second aspect of the invention a user equipment according to claim 7.

In a third aspect of the invention it is proposed a method for a base station according to claim 11. It is further suggested according to a fourth aspect of the invention a base station according to claim 16.

According to the first aspect of the invention it is proposed a method for a user equipment operating by means of a base station in a cellular network, the user equipment being configured to transmit data packets with a higher and with a lower priority, comprising the steps of:
- sending a in a first message a lower priority data packet,
- receiving a HARQ non-acknowledgement response from the base station, in case the transmission of at least one higher priority data packet becomes due since the step of sending the lower priority data packet:
- sending a second message containing an element being indicative to discontinue transmission of the lower priority data packet to the base station,
- in response receiving a response message from the base station.

This aspect of the invention relates to a user equipment capable of operating with a base station of a cellular wireless network implementing at least one of the technology standards of LTE (4G), NR (5G) or beyond.

The user equipment usually comprises all means for communicating with a base station of a home or visited cellular network. It is in particular composed of a communication unit, like a wireless modem, and an application device. Such user equipment might also be incorporated in another device or apparatus, like a car entertainment unit, house automation resp. alarm system or an elevator control unit.

For such devices it is of strong importance, that data transmissions are reliably and within a certain time period are carried out. Furthermore e.g. house automation and alarm systems have different communication tasks of different priority. E.g. when an alarm is to be sent out, i.e. in case of fire, then it must not be delayed by submitting a data packet of lower priority, e.g. a status update of window shadowing.

For increasing the reliability of data transmissions the (H)ARQ procedure was introduced in cellular technology standards. With ARQ (Automatic Repeat Request) it was introduced to resend a data packet (PDU), when the receiving side indicated with a non-acknowledgment response message (NACK), that it was not fully correct received, i.e. checksum and received packet bits do not entirely match. With HARQ (Hybrid Automatic Repeat Request) the ARQ concept was even enhanced with forward error coding (FEC), resp. soft combining. That means when a non-acknowledgment response happens, the resend packet is used by the receiving side together with the previous received packet(s) by combining them to be able to successfully decode it. For that preferably different redundancy versions and/or modulation coding schemes are applied in order to increase the reliability of well decoding the data packet. Even with the first retransmission the combination of the 2 HARQ redundancy versions of the data packet may not be correctly decodable, hence a second and third retransmission with respective redundancy versions can be made, which causes the delay further to increase. However applying the (H)ARQ concept does not take into account the urgency resp. priority of a data transmission, and such when a lower priority data transmission is repeated for various time, other higher priority data transmission may be blocked.

This is where the invention comes into play. As part of the inventive method of the first aspect of the invention it is proposed that in case the user equipment sends a low priority data packed it may be the case that a HARQ non-acknowledgment response (NACK) is sent by the cellular network, resp. the base station the user equipment is currently operating with.

Only for this situation a solution is needed because if the data transmission is successful, then for the next data transmission it may be decided to transmit higher priority data transmissions.

According to the invention in that situation it is checked if at least one higher priority data packet became due meanwhile. Meanwhile means in particular since the sending of the lower priority data packet. This could also be the case for a previously attempt to send the lower priority data packet, e.g. when it was not accepted through the HARQ process for more than one time.

With regards to lower and higher priority data packet it is preferably distinguished between both as a relative rating. This rating might relate to the service - e.g. ultra low latency versus normal transmission - to the QoS or any other parametrization that indicates that the one data packet has a higher urgency than the other. A respective indication is preferably retrieved from related QoS class or by higher layer indication, i.e. emergency data.

In case the check is positive, means a higher priority data packet is available, then the method suggests sending a second message to the base station. That message is indicative to the base station to discontinue transmission of the lower priority data packet.

Of course more than one HARQ processes may be in place. For simplicity reasons only one HARQ process / SAW is assumed. If e.g. a base station allows more HARQ processes of course first the other processes may be used first for sending the higher priority data packet, but also here the situation may appear that the HARQ processes are blocked by lower priority data packets while a higher priority data packet is due to be sent. The proposed solution to be applied does not differ for many HARQ processes.

For the base station the data transmission of the lower priority data packet is not yet completed. With the NACK message it indicates to the user equipment, to repeat the transmission, in order to be able to fully decode the data packet, either by the new transmission alone or in combination of the new transmission with the previous transmissions of the data packet.

Hence the base station needs an indication that informs about the fact, that - at least for the moment - no further transmissions for the currently processed data packet is to be expected.

Such indication may in a first embodiment be an message informing about a new data packet that is to be sent. Such indication may comprise a flag that informs about the end of the data transmission of the lower priority data packet. This concept is in particular known as the new data indicator NDI, which is preferably sent through the PDCCH (DCI). The DCI is the downlink control information which provides various formats containing a bitmap indicating PRBs from a set of PRBs from a subset of resource block groups determined by the system bandwidth and provides information among others related to PRB, power control, MCS and HARQ process.

The NDI bit is toggled that means different from the one sent in previous transmission. This means new data is transmitted.

According to an advantageous embodiment said second message further comprises information relating to a higher priority data packet.

With this embodiment it is preferably achieved to send the new higher priority data packet. This saves time for switching to the transmission of the higher priority data packet, and so assures that the data packet is transmitted in time. However this requires that with the second message an indication, in particular the toggled NDI bit is sent with the second message, so that the receiving device notices that the sent packet is not another try for the pending lower priority data packet, but a new data packet.

Preferably it is proposed in another embodiment that in response to receiving the response message the method comprising the step of transmitting a third message in consideration of the response message, said third message comprising a higher priority data packet.

Preferably after sending the message, which comprises information relating to the higher priority data packet, the user equipment receives a response message from the base station. When this confirms the sending of the higher priority data packet, then with a third message the higher priority data packet is indeed transmitted, thereby interrupting the transmission of the lower priority data packet.

In another preferred embodiment it is proposed that the second message comprises information indicative of a request for higher priority data packet transmission, and the response message comprises indication relating to higher priority data packet transmission.

With this embodiment it is preferably achieved to prepare the sending of the new higher priority data packet. In a preferred embodiment said second message comprises an size indication differing from the size required for the lower priority data packet transmission.

At least an resource indication resp. information in terms of packet size, coding scheme etc. may be transmitted.

With the response from the base station it is then provided the information how the higher priority data packet may be transmitted, or at least the remainder of the higher priority data packet.

According to another preferred embodiment it is proposed that comprising following the complete higher priority data packet transmission of at least one data packet the step of suspending the lower priority data packet transmission. With this embodiment it is assured that the suspended lower priority data packet is sent after completely sending the higher priority data packet. That means, by way of resuming the lower priority data packet is after successfully sending the higher priority data packet sent. This is preferably happening without further notice, after the ACK message for the higher priority data packet was received.

It is for the user equipment not to distinguish if the receiving base station can reuse previously submitted data transmissions which by way of soft combining with a now transmitted lower priority data packet can be fully decoded, or if the lower priority data packet needs to be completely resend again. In fact, both is possible and encompassed by this embodiment. It is a matter of how often the data packet needs to be transmitted, should the signalling conditions still be not sufficient for one time sending.

Effectively the HARQ process is also carried out in case of downlink data transmission, hence the described measures can be applied analogously.

According to the second aspect of the invention it is proposed a user equipment operating by means of a base station in a cellular network, the user equipment being configured to transmit data packets with a higher and with a lower priority, wherein the user equipment is configured to:
- send in a first message a lower priority data packet,
- receive a HARQ non-acknowledgement response from the base station, in case the transmission of at least one higher priority data packet becomes due since the step of sending the lower priority data packet:
- send a second message containing an element being indicative to discontinue transmission of the lower priority data packet to the base station,
- in response receive a response message from the base station.

The user equipment in particular comprises a transceiver, respectively receiver and transceiver circuitry, processing circuitry, volatile and or permanent memory and an antenna. Further the user equipment may be composed of a communication unit comprising the components necessary for communicating with the base station, in particular a cellular modem, and an application part, typically comprising an application processor and some kind of user interface. Preferably a user identification circuit cards is comprised or communicatively coupled with the user equipment for maintaining the access credentials for the respective home or visited cellular network.

The second aspect shares the advantages of the first embodiment.

According to the third aspect of the invention it is proposed a method for a base station of a cellular network, configured to serve at least one user equipment being configured to transmit data packets with a higher and with a lower priority, wherein data transmission is organized in layers including a physical layer, during transmission of the data packets with lower priority the transmission the method comprising the steps of:
- receiving on the physical layer a submission comprising information relating to a data packet,
when the base station is unable to decode:
- sending a non-acknowledgement response to the user equipment,
- receiving a second message containing an element being indicative to discontinue transmission of the lower priority data packet to the base station,
- suspending said data packet transmission,
- sending a confirmation message to user equipment.

The third aspect of the invention relates to a method for a base station of a cellular network with that a user equipment according to the second aspect of the invention is supposed to operated.

The base station is in particular capable of supporting at least one of the technology standards of 4G or 5G. It is one of a plurality of base stations of the cellular network. The cellular network preferably supports a couple of technology standards, in particular through various radio access networks (RANs). With a couple of more cellular network components, in particular core network components, like a HSS, a user equipment camping on said base station is enable to carry out cellular communication service by means of said cellular network.

Generally the base stations is one actor in the described execution of a (H)ARQ procedure, that means it receives a data packet on the physical layer, and indicates to the sender, if it was successfully received or not, which is done with a non-acknowledgment message (NACK) or an acknowledgment message (ACK). In the first case the user equipment would try to send the data again.

In the case of HARQ, the base station memorizes the previously sent data packets since the last ACK, typically in its HARQ buffer and tries to combine the received signals to a decodable packet. If this is the case, it sends an ACK message.

This approach requires that a data packet on the physical layer which is received in response to a non-acknowledgment response to the sending user equipment is without further notice interpreted as the same data packet (not accounting potential differences in error coding, checksums etc.), as the previous transmission(s).

As described for the first aspect of the invention, the user equipment might be inclined to send a higher priority data packet instead of continuing sending a lower priority data packet to the base station.

For allowing the base station to figure out this situation, the method of this aspect of the invention suggests, that in response to sending the non-acknowledgment message to the user equipment, the base station receives a second message containing an element being indicative to discontinue transmissions of the lower priority data packet.

This information is in particular a new data indicator NDI. If the NDI bit is toggled, the base station knows to suspend the data packet transmission of the lower priority data packet.

In return the base station sends a confirmation message to the user equipment.

According to a preferred embodiment it is proposed that the base station maintaining a HARQ buffer and a retry counter,
wherein the step of suspending data packet transmission in particular comprises at least one out of the group of:
- flushing the HARQ buffer,
- resetting the retry counter,
- allocating a new HARQ buffer for higher priority data packet transmission.

With this embodiment the base station, when maintaining HARQ buffer - in particular per HARQ process - would flush the HARQ buffer. The HARQ buffer contains information relating to the previously received data packet transmission, that were not decodable. With the HARQ buffer the base station has the possibility to decode the data packet when combining the single transmissions.

Further a retry counter is maintained. This is for counting the number of unsuccessfully received data packet transmissions. When a threshold of this counter is reached, the data packet is rejected with a radio link failure. After a couple of radio link failures, resp. timers relating to not successfully receiving data packets, the base station could even close the connection with that user equipment.

Effectively, when the base station takes notice that the user equipment discontinued sending the lower priority data packet, then it will according to this embodiment flush the HARQ buffer and reset the retry counter, as well as allocate a new HARQ buffer for the higher priority data packet transmission. This preferably frees the base station from remainders of the previously sent lower priority data packet. On the other hand, then to resume the transmission of the lower priority data packet would effectively mean to send it anew. As it is a lower priority data packet, this has only low impact for the user equipment and is therefore acceptable in light of the resources saved at the base station. Alternatively or additionally it is proposed according to another preferred embodiment that when detecting the completion of the higher priority data packet transmission of at least one data packet, the method comprising the step of suspending the lower priority data packet reception.

With this embodiment the suspending of the lower priority data packet transmission is suggested, once the completion of the higher priority data packet transmission is detected.

Preferably this also comprises reconstruction of the HARQ buffer for this HARQ process. Further also the retry counter is set to the value before the NDI message was received. Additionally - if needed - the allocation for the lower packet is recreated.

In that case when this reconstruction is successful, which requires caching of the necessary data at the base station side, then the lower priority data packet transmission can continue where it was interrupted.

Otherwise it has to start anew. Preferably the user equipment is informed by the base station about if a new sending is to be carried out.

In another preferred embodiment it is proposed that the received second message further comprises information relating to a higher priority data packet, in response the message comprising:
- allocating resources for higher priority data,
- sending with the confirmation message indicating a data assignment according to higher priority data packet,
- receiving on the physical layer the higher priority data packet.

This embodiment relates to the situation that with the message from the user equipment indicating to discontinue the transmission of the lower priority data packet the user equipment in parallel sends information relating to the pending higher priority data packet.

In particular a request for allocating resources for that higher priority data packet is comprised in that second message.

In response the base station would then - if available - allocate the requested resources. This in particular happens after freeing resources for the lower priority data packet.

With a confirmation message to the user equipment the information if resp. that the resource allocation has happened is submitted. Consequently with the next step the base station receives on the physical layer the higher priority data packet

According to another preferred embodiment it is proposed that said second message comprises an size indication differing from the size required for the lower priority data packet transmission, the method comprising the step of assigning a packet size considering said size indication.

With this embodiment the base station receives with the second message from the user equipment an indication relating to the size compared to the size of the lower priority data packet transmission.

In response the packet size for the higher priority data packet is amended by the base station. Preferably this is indicated to the user equipment with the confirmation message.

Preferably, if no such size indication is received, the same packet size is applied for the higher priority data packet.

Effectively the HARQ process is also carried out in downlink direction, the described measures can be applied analogously.

According to the fourth aspect of the invention it is proposed a base station of a cellular network, configured to serve at least one user equipment being configured to transmit data packets with a higher and with a lower priority, wherein data transmission is organized in layers including a physical layer, during transmission of the data packets with lower priority the transmission the base station is configured to:
- receive on the physical layer a submission comprising information relating to a data packet,
when the base station is unable to decode:
- send a non-acknowledgement response to the user equipment,
- receive a second message containing an element being indicative to discontinue transmission of the lower priority data packet to the base station,
- suspend said data packet transmission,
- send a confirmation message to user equipment.

The base station comprises wireless receiving and transmitting circuitry and at least one antenna for exchanging of signals on the air interface with a plurality of user equipments. Further it comprises communication circuitry, either wired or wireless for communicating with other cellular network components, like components of the evolved packet core (EPC) resp. the NG-RAN / AMF. Also direct or indirect communication links to other base stations of the cellular network, either supporting the same RAN or different, is preferably available. Further the base station comprises processing circuitry, has volatile and permanent memory, for storing and executing the operation software for the base station.

The fourth aspect of the invention shares the advantages of the third aspect.

As it is shown this invention advantageously solves the depicted problem and proposes a solution for managing data packets of different priorities, in order to comply with urgency requirements.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents a user equipment of the type to which the present invention is applied as an embodiment;
- Fig. 2: shows in a sequence diagram a first exemplifying embodiment of the present invention;
- Fig. 3: shows in a sequence diagram a second exemplifying embodiment of the present invention.

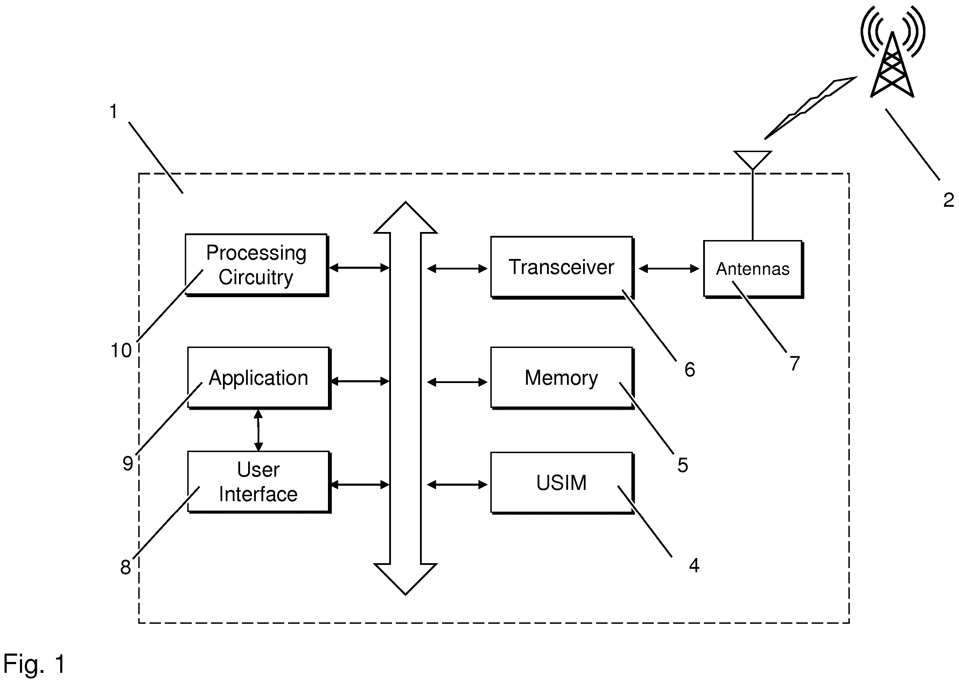

FIG. 1 schematically shows a user equipment 1 of the type to which the present invention is applied as an embodiment. The user equipment 1 is operating with a base station 2 of a cellular network.

The user equipment of this exemplifying embodiment is composed of a transceiver 6, which incorporates transmitter and receiver circuitry for HF communication by means of at least one antenna 7. Via these component a direct link to the base station, is possible.

This does in the first place not require that the user equipment is camping on the base station, e.g. for receiving broadcasted information, like system information, it is sufficient to be synchronized on the base station. Additionally the user equipment comprises processing circuitry 10, in particular a processor, preferably a baseband processer. All shown components are in particular communicatively coupled within the user equipment.

The processing circuitry controls in particular the transceiver 6.

Additionally memory 5, preferably both volatile memory (RAM) and permanent memory, like a flash component, is comprised in the user equipment 1. According to the setup of the user equipment it further comprises an application. In that case it is advantageous to combine all the functionalities for applying connectivity to the application in a modem, a so-called wireless module. The application controls the modem via a call interface, e.g. an AT interface.

Hence the application may preferably also comprise an additional processing circuitry, like a common CPU. Alternatively it shares resources of the processing circuitry 10 of the wireless module.

The application then preferably comprises a user interface 8, e.g. a touch screen, buttons and display or another programmable interface for access from connectable devices.

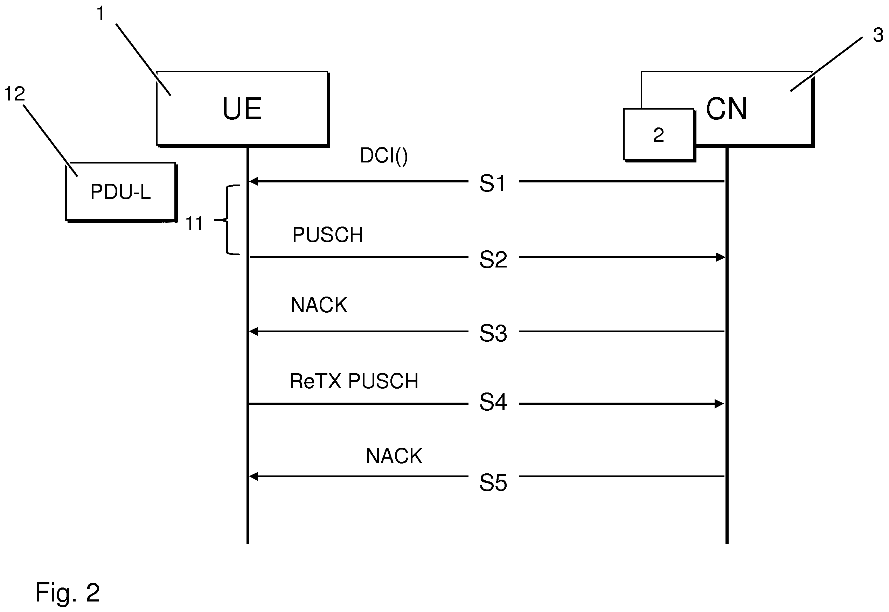

For applying an embodiment of the inventive method to a user equipment 1 as shown in FIG. 1, it is shown a sequence diagram in FIG. 2.

It shows the communication between a user equipment 1 (abbreviated UE) and on the other side the cellular network 3 (CN), or to be more specific the RAN part of the cellular network, more precise the base station (2) like a eNodeB,. As shown before the user equipment directly communicates with the base station 2. However, the invention encompasses that the transmissions are initiated by any component of the cellular network 3, including the base station 2. Also a plurality of base station 2 could be involved in the procedure. The described method starts with message S1, where the CN 1 sends a message to the user equipment with parameter for sending a data packet on the physical layer. This might happen by way of a DCI 0 (uplink grant) message over PDSCH and informs the user equipment about the current HARQ process and PUSCH parameters to be used, e.g. MCS power PRB and resource block assignment of the UL band. Such parameter comprise a process ID, the redundancy value RV and or the modulation and coding scheme (MCS).

In response the user equipment 1 sends within designated time gap for uplink (UL) transmission in said technology. In LTE four subframes on the assigned uplink resources 11 of a PUSCH message S2 comprising the data packet (PDU) and, if indicated related, additional control information such as CQI. The user equipment at that point in time has only available a data packet 12 with a given priority. Hence it starts sending the data packet with message S2.

The data transmission was not successful in the sense that the PDU could not be correctly decoded by the base station 2 resp. the cellular network 3.

Hence with message S3 the user equipment is informed with an NACK message about the unsuccessful delivery. This NACK message preferably comprises additional parameters e.g. indicating another redundancy version related to the HARQ process, MCS.

Taking this into account the user equipment retransmits the PDU again with message S4.

With message S5 the base station 2 indicates to the user equipment that the transmission was still not successful.

Normally the process would continue until the maximum number of retries is reached.

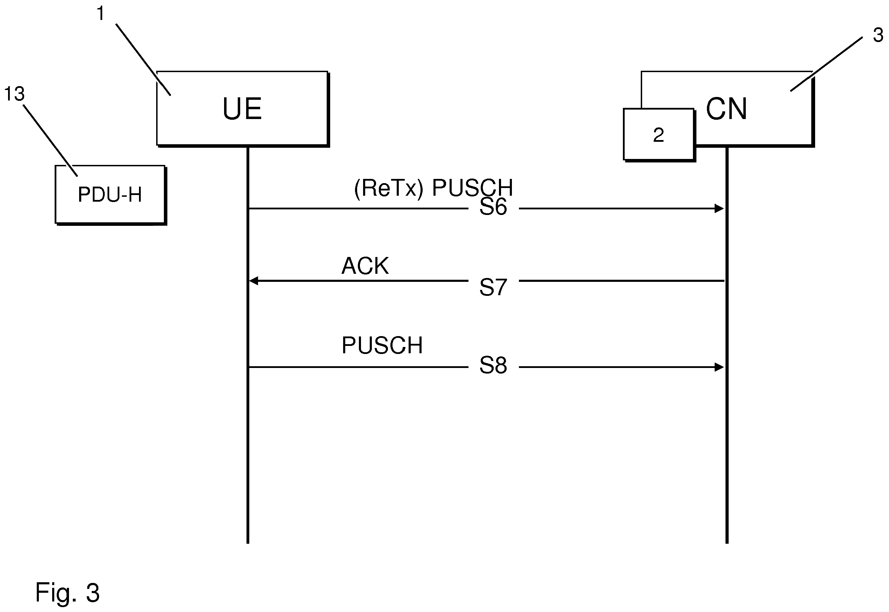

On FIG. 3 it is indeed shown, that instead of resending the data packet 12 again, the user equipment figures out that a data packet 13 with higher priority ranking is available, which needs to be send to the base station, instead of trying again to send the data packet 12. Hence it sends a message S6 indicating that a new data packet is to be send, that means include a control bit such as "to toggle the NDI bit" in the DCI in said respective UL control information. This could also be interpreted as a suspend indication related to current transmission. Further information relating to the higher priority data packet might be submitted with message S6 which allow the base station to allocate the needed resources and apply a packet size etc.

In response the base station indicates with message S7, that it is ready to receive the data packet with the respective parameters for sending. This can be done by an acknowledgement ACK which is clear that it can't be related to normal HARQ data combination, as that would need to have failed but rather that the base station has understood that new data were transmitted or are to be transmitted including the DCI / NDI indication.

Consequently with S8 the user equipment sends with another PUSCH message the higher priority data packet 13 to the base station. With that submission the normal HARQ process for this data packet 13 starts.

After this could be executed successfully, preferably the user equipment 1 resumes sending of the lower priority data packet 12 to the base station 2 or sends further PDU-H data.

In the above detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The above detailed description is, therefore, not to be taken in a limiting sense, and the scope of the present invention is defined only by the appended claims, appropriately interpreted, along with the full range of equivalents to which the claims are entitled.

## Claims

1. Method for a user equipment (1) operating by means of a base station (2) in a cellular network (3), the user equipment (1) being configured to transmit data packets with a higher and with a lower priority, comprising the steps of:
- sending a in a first message a lower priority data packet (PDU-L),
- receiving a HARQ non-acknowledgement response from the base station (2), in case the transmission of at least one higher priority data packet (PDU-H) becomes due since the step of sending the lower priority data packet (PDU-L):
- sending a second message containing an element being indicative to discontinue transmission of the lower priority data packet (PDU-L) to the base station (2),
- in response receiving a response message from the base station (2).

2. Method according to claim 1
wherein said second message further comprises information relating to a higher priority data packet (PDU-H).

3. Method according to claim 2,
wherein in response to receiving the response message the method comprising the step of transmitting a third message in consideration of the response message, said third message comprising a higher priority data packet (PDU-H).

4. Method according to at least one of the claims 1 to 3,
wherein the second message comprises information indicative of a request for higher priority data packet transmission,
and the response message comprises indication relating to higher priority data packet transmission.

5. Method according to claim 4,
wherein said second message comprises an size indication differing from the size required for the lower priority data packet transmission.

6. Method according to at least one of the claims 1 to 5,
comprising following the complete higher priority data packet transmission of at least one data packet the step of suspending the lower priority data packet transmission.

7. User equipment (1) operating by means of a base station (2) in a cellular network (3), the user equipment (1) being configured to transmit data packets with a higher and with a lower priority, wherein the user equipment (1) is configured to:
- send in a first message a lower priority data packet (PDU-L),
- receive a HARQ non-acknowledgement response from the base station (2), in case the transmission of at least one higher priority data packet (PDU-H)becomes due since the step of sending the lower priority data packet (PDU-L):
- send a second message containing an element being indicative to discontinue transmission of the lower priority data packet (PDU-L) to the base station (2),
- in response receive a response message from the base station (2).

8. User equipment (1) according to claim 7,
wherein said second message further comprises information relating to a higher priority data packet (PDU-H).

9. User equipment (1) according to claim 8,
wherein in response to reception of the response message the user equipment is configured to transmit a third message in consideration of the response message, said third message comprising a higher priority data packet (PDU-H).

10. User equipment (1) according to at least one of the claims 7 to 9, wherein the second message comprises information indicative of a request for higher priority data packet transmission,
and the response message comprises indication relating to higher priority data packet transmission.

11. Method for a base station (2) of a cellular network (3), configured to serve at least one user equipment (1) being configured to transmit data packets with a higher and with a lower priority, wherein data transmission is organized in layers including a physical layer,
during transmission of the data packets with lower priority (PDU-L) the transmission the method comprising the steps of:
- receiving on the physical layer a submission comprising information relating to a data packet,
when the base station (2) is unable to decode:
- sending a non-acknowledgement response to the user equipment (1),
- receiving a second message containing an element being indicative to discontinue transmission of the lower priority data packet (PDU-L) to the base station (2),
- suspending said data packet transmission,
- sending a confirmation message to user equipment (1).

12. Method according to claim 11,
wherein the received second message further comprises information relating to a higher priority data packet (PDU-H), in response the message comprising:
- allocating resources for higher priority data,
- sending with the confirmation message indicating a data assignment according to higher priority data packet (PDU-H),
- receiving on the physical layer the higher priority data packet (PDU-H).

13. Method according to claim 11 or 12,
the base station (2) maintaining a HARQ buffer and a retry counter,
wherein the step of suspending the data packet transmission includes at least one out of the group of:
- flushing the HARQ buffer,
- resetting the retry counter,
- allocating a new HARQ buffer for higher priority data packet transmission.

14. Method according to at least one of the claims 12 to 13,
wherein said second message comprises an size indication differing from the size required for the lower priority data packet (PDU-L) transmission, the method comprising the step of assigning a packet size considering said size indication .

15. Method according to at least one of the claims 11 to 14,
comprising when detecting the completion of the higher priority data packet transmission of at least one data packet, the method comprising the step of suspending the lower priority data packet (PDU-L) reception.

16. Base station (2) of a cellular network (3), configured to serve at least one user equipment (1) being configured to transmit data packets with a higher and with a lower priority, wherein data transmission is organized in layers including a physical layer,
during transmission of the data packets with lower priority the transmission the base station (2) is configured to:
- receive on the physical layer a submission comprising information relating to a data packet,
when the base station is unable to decode:
- send a non-acknowledgement response to the user equipment (1),
- receive a second message containing an element being indicative to discontinue transmission of the lower priority data packet (PDU-L) to the base station (2),
- suspend said data packet transmission,
- send a confirmation message to user equipment (1).

17. Base station (2) according to claim 16,
wherein the received second message further comprises information relating to a higher priority data packet (PDU-H), in response the base station (2) is configured to:
- allocate resources for higher priority data,
- send with the confirmation message indicating a data assignment according to higher priority data packet (PDU-H),
- receive on the physical layer the higher priority data packet (PDU-H).
